# FASCICULE DE BREVET EUROPEEN

(11) **EP 1 880 825 B1**
(45) Date de publication et mention de la délivrance du brevet: **17.02.2010**
(21) Numéro de dépôt: 07112449.9
(22) Date de dépôt: 13.07.2007
(51) Int. Cl.: B29C 49/42, B66C 1/54, B65G 47/90, B29C 49/06

(54) **Dispositif de support individuel d'un récipient pourvu d'un col et installation pourvue de dispositifs de transport avec un tel dispositif de support**
Vorrichtung zur individuellen Halterung eines Behälters, der mit einem Hals versehen ist, und Anlage, die mit Fördervorrichtungen mit einer solchen Halterungsvorrichtung versehen ist
Individual support device for a container equipped with a neck and installation equipped with transport devices having such a support device

(30) Priorité: 20.07.2006 FR 0606622
(43) Date de publication de la demande: 23.01.2008
(73) Titulaire: SIDEL PARTICIPATIONS, 76930 Octeville-sur-Mer (FR)
(72) Inventeur: Lapert, Christophe, 76930 Octeville s/Mer (FR)
(74) Mandataire: Cabinet Plasseraud

(56) Documents cités:
- WO-A2-02/38353
- US-A- 5 419 427
- US-A- 6 106 273
- US-A1- 2005 092 892

## Description

La présente invention porte sur un dispositif de support individuel d'un récipient pourvu d'un col propre à supporter ledit récipient par son col, ce dispositif comprenant un organe de support qui est propre à être engagé à l'intérieur du col du récipient et qui comporte des éléments d'appui effaçables élastiquement en direction radiale et propres à prendre appui avec friction contre la paroi intérieure dudit col.

L'invention s'applique plus particulièrement aux installations de traitement en ligne pour la fabrication ou le traitement de récipients en matière thermoplastique telle que du PET, dans lesquelles les récipients sont déplacés individuellement les uns à la suite des autres à l'aide de dispositifs de transport aptes à maintenir les récipients par leur col, de manière à laisser leurs corps dégagés. Toutefois, l'invention peut s'appliquer également dans toute installation où il est nécessaire de déplacer d'un point à un autre un récipient.

Dans la suite de la description, il est entendu par « récipient pourvu d'un col », tout corps creux présentant un col, tel que des préformes, à partir desquelles sont fabriqués des récipients par soufflage ou étirage-soufflage, des récipients intermédiaires dans des processus à étapes de soufflage ou étirage-soufflage multiples, des récipients conformés à leur forme définitive et devant subir un traitement additionnel, et des récipients finaux.

Dans le cas particulier du transport de préformes en vue de leur chauffage préalablement à l'étape de soufflage, il est nécessaire de prévoir un dispositif de transfert permettant de prendre une préforme par son col (« vêtissage ») et de la déplacer dans une zone de chauffage, en général dans un four tunnel, dans laquelle son corps doit être chauffé à la température de transition vitreuse de la matière thermoplastique, tout en restant à une température inférieure à la température de cristallisation.

Pour réaliser ce transfert, il est prévu des éléments de transport munis de dispositifs de préhension formé d'un mandrin qui est propre à être engagé à l'intérieur du col de la préforme (vêtissage intérieur) et qui maintient cette dernière par pression contre la face interne du col.

Il est présenté, dans le document FR 2 706 876 au nom de la Demanderesse, un dispositif de vétissage intérieur de préformes à partir d'une tête de préhension ayant une extrémité à bague fendue. Plus précisément, il est prévu un mandrin qui comporte un corps de mandrin avec une gorge annulaire à l'intérieur de laquelle est logée à rotation folle une bague fendue déformable élastiquement dans le sens radial. Le mandrin est introduit à l'intérieur du col de la préforme jusqu'à ce que le bord de l'orifice du col vienne en butée contre un épaulement annulaire du corps du mandrin. Selon ce mode de réalisation, le diamètre externe de la bague non déformée est sensiblement supérieur au diamètre externe du corps du mandrin et au diamètre interne du col.

Selon le même principe du vêtissage intérieur, il est connu, selon le document FR 2 794 109 au nom de la Demanderesse, de réaliser un système de convoyage de préformes formé d'un ensemble d'éléments de transport comprenant chacun un dispositif de préhension muni à son extrémité libre d'une bague annulaire fendue formée de plusieurs secteurs ; lorsque la bague est engagée intérieurement dans le col d'une préforme, les secteurs sollicités radialement vers l'extérieur par des moyens élastiques sont aptes à prendre appui sur la surface intérieure cylindrique du col.

Du fait du surdimensionnement du diamètre extérieur de la bague fendue à l'état libre par rapport au diamètre interne du col de la préforme qui lui est légèrement inférieur, la bague élastique fendue ou à secteurs est apte à se déformer radialement vers l'intérieur lors de l'insertion de la tête de préhension dans le col tout en permettant la création de forces de friction entre la paroi interne du col et le pourtour extérieur de la bague fendue ou à secteurs entraînant ainsi la solidarisation et le maintien de la préforme sur le dispositif de préhension.

L'inconvénient des dispositifs de préhension selon l'art antérieur réside dans le fait qu'ils présentent une tolérance relativement réduite vis-à-vis des différences dans le diamètre interne des cols, par exemple en raison de fabrications diverses des préformes (fabricants différents, époques de fabrication différentes,...). Ainsi, il est nécessaire de remplacer ces dispositifs de préhension si l'on souhaite transporter des récipients avec des diamètres internes très légèrement différents. En égard au nombre considérable (plusieurs centaines) de dispositifs de préhension pouvant équiper une installation de transport, il en résulte des temps d'immobilisation importants des installations dans lesquelles sont utilisés ces dispositifs de préhension et un coût considérable en matériels tenus en réserve.

Il existe donc une requête permanente de la part de la pratique pour un dispositif de préhension par vêtissage intérieur de récipient présentant une plus grande tolérance aux variations des diamètres internes des cols des récipients.

Par ailleurs, les dispositifs de préhension par vêtissage intérieur selon l'art antérieur ne présentent pas une surface de contact suffisante, d'où un risque que le récipient soit saisi en position inclinée, voire un risque de désolidarisation du récipient au cours de son transport.

Enfin, les secteurs de bague n'ont pas une surface externe plane, mais une gouttière définissant deux saillies annulaires écartées axialement l'une de l'autre (la section droite des secteurs est en forme de V très ouvert) par lesquelles s'effectue le contact avec la face interne lisse des cols. Ces secteurs de bague ainsi conformés doivent être usinés avec une très grande précision afin d'assurer que les deux saillies annulaires portent effectivement contre le col sur tout leur pourtour, ce qui garantit un positionnement axial correct du récipient. La conséquence est que les secteurs de bague ainsi conformés sont onéreux.

Il est donc requis, de façon récurrente par la pratique, un dispositif de préhension de récipient permettant de mieux garantir l'alignement axial du récipient au cours de son transport, et cela en ayant recours à des moyens moins onéreux que ceux actuellement exploités.

Le document US 5 419 427 divulgue (figures 13, 14) un dispositif tel que mentionné au préambule qui comporte une embase cylindrique de révolution comprenant un ensemble de lames métalliques souples, d'étendue axiale, juxtaposées périphériquement supportant centralement un bouton saillant en une matière propre à engendrer une friction ; les extrémités desdites lames sont fixées sur deux socles déplaçables l'un par rapport à l'autre ; leur rapprochement l'un de l'autre provoque le cintrage des lames vers l'extérieur et la mise en appui avec friction des boutons contre la face interne du col d'un récipient.

Le document US 6 106 273 divulgue un dispositif tel que mentionné au préambule qui comporte un ensemble de bras d'étendue axiale, répartis périphériquement sur une embase de support sur laquelle ils sont articulés en rotation, dans des directions radiales respectives, par une de leurs extrémités, avec rappel élastique en position axiale ; leur extrémité opposée est conformée en sphère ou calotte sphérique propre à être en appui élastique contre la face interne du col d'un récipient.

Le document WO02/38353 décrit un dispositif de support individuel tel que défini par le préambule de la revendication 1.

La présente invention se propose de résoudre, au moins en partie, les problèmes liés à l'art antérieur en proposant un dispositif de support individuel d'un récipient pourvu d'un col propre à supporter ledit récipient par son col, tel que défini par la revendication 1.

Un dispositif de vêtissage intérieur agencé avec des billes effaçables conformément à l'invention peut coopérer avec des cols de récipients dont les diamètres varient dans une plage beaucoup plus importante que la plage de tolérance acceptée par les dispositifs de préhension à bague à secteurs de l'état de la technique. Typiquement, le dispositif à billes effaçables conforme à l'invention accepte des variations de plus ou moins 0.5 mm sur le diamètre interne des cols, alors que les dispositifs à bague à secteurs n'acceptaient qu'une tolérance de plus ou moins 0.12 mm.

Au surplus, la fabrication d'une tête de préhension conçue selon l'invention ne nécessite pas des usinages aussi précis que ceux requis pour les têtes de préhension à bague à secteurs, et elle se révèle donc moins coûteuse.

Certes, on connaît déjà des dispositifs de préhension à billes effaçables. Toutefois, il s'agit de dispositifs de préhension qui sont propres à coiffer les cols des récipients et qui sont agencés pour agripper les cols par la face extérieure de ceux-ci (vêtissage extérieur). La Demanderesse exploite de tels dispositifs de préhension à vêtissage extérieur à billes effaçables depuis de nombreuses années. Toutefois, dans ces dispositifs à vêtissage extérieur, le problème de la solidarisation mécanique de la tête de préhension équipée des billes effaçables avec le col des récipients se pose en d'autres termes, de façon plus simple, du fait que, lors du vêtissage, les billes viennent prendre appui sous des reliefs saillants de la face externe du col (gorge annulaire prévue pour la bague d'inviolabilité de bouchon de fermeture du récipient, filets de vissage du bouchon lorsque le bouchon est vissable).

A l'inverse, la face interne du col des récipients est généralement lisse et n'offre aucun appui pour les billes : l'assemblage mécanique de la tête de préhension conforme à l'invention avec le col des récipients repose uniquement sur le frottement tangentiel entre les surfaces en contact.

Afin d'assurer plus efficacement un maintien du récipient de manière sensiblement coaxiale à l'axe du dispositif de support et d'augmenter les forces de friction entre les billes et la paroi interne du col, il est préférable que les lumières de la paroi externe soient réparties en plusieurs rangées parallèles et que les billes soient disposées en plusieurs rangées respectives. De façon pratique, il peut suffire que les lumières de la paroi externe soient réparties en deux rangées parallèles et que les billes soient disposées en deux rangées respectives ; mais un nombre supérieur (par exemple trois) de rangées de lumières et de billes peut être retenu si cela s'avère nécessaire pour l'obtention du résultat recherché.

Afin d'augmenter les forces de friction entre la tête de vêtissage et la paroi interne du col, les rangées de billes peuvent être décalées les unes par rapport aux autres, de manière telle qu'une bille d'une rangée soit encadrée par deux billes de la rangée immédiatement supérieure et/ou inférieure.

Afin de permettre aux éléments d'appui d'exercer une force de pression suffisante contre la paroi intérieure du col, les moyens de rappel élastique comprennent au moins un coussin annulaire élastique disposé autour du noyau et sur lequel les billes sont en appui radial élastique. En pratique, le coussin annulaire élastique peut comprendre au moins deux anneaux toriques élastiques juxtaposés et définissant à leur jonction extérieure un dièdre annulaire curviligne dans lequel prennent appui les billes d'une rangée. De manière optimale, le coussin annulaire élastique peut comprendre trois anneaux toriques élastiques juxtaposés et définissant à leurs jonctions extérieures deux dièdres annulaires curvilignes parallèles dans lesquels prennent appui respectivement les billes des deux rangées.

Afin de faciliter le remplacement des moyens de rappel élastique ou des billes lors des opérations de maintenance, le canal peut, de façon simple, être défini par une gorge annulaire creusée dans la paroi frontale de l'embase et par une plaque de fermeture assemblée sur ladite face frontale de l'embase.

De manière avantageuse, la présente invention peut s'appliquer plus particulièrement aux installations de transport de récipients pourvus de cols, comportant une multiplicité de dispositifs de transport disposés les uns à la suite des autres de façon articulée en une chaîne de transport et équipés chacun d'un dispositif de support individuel d'un récipient par son col tel que précédemment caractérisé.

La présente invention est maintenant décrite à l'aide d'exemples uniquement illustratifs et nullement limitatifs de la portée de la présente invention et à partir des illustrations suivantes dans lesquelles :
- la figure 1 est une vue en coupe partielle du dispositif de support selon l'invention avant insertion de la tête de préhension dans le col d'un récipient ;
- la figure 2 est une vue en coupe partielle du dispositif de support après insertion de la tête de préhension dans le col d'un récipient, et
- la figure 3 est une vue frontale de l'organe de support divisé axialement.

Par mesure de clarté dans la suite de la description, les termes « haut », « bas », « inférieur » et « supérieur » sont utilisés uniquement en référence à la disposition des éléments tels que représentés sur les figures, sans que ces termes ne désignent la disposition exacte des éléments dans les installations de traitement où l'invention s'applique. Cela est plus particulièrement le cas quand les dispositifs de préhension sont destinés à saisir des préformes avec leur col dirigé verticalement vers le haut, puisque ces préformes doivent ensuite être chauffées avec leur col dirigé vers le bas avant un nouveau retournement de ces préformes avant l'opération de soufflage et éventuellement d'étirage dans une unité de soufflage.

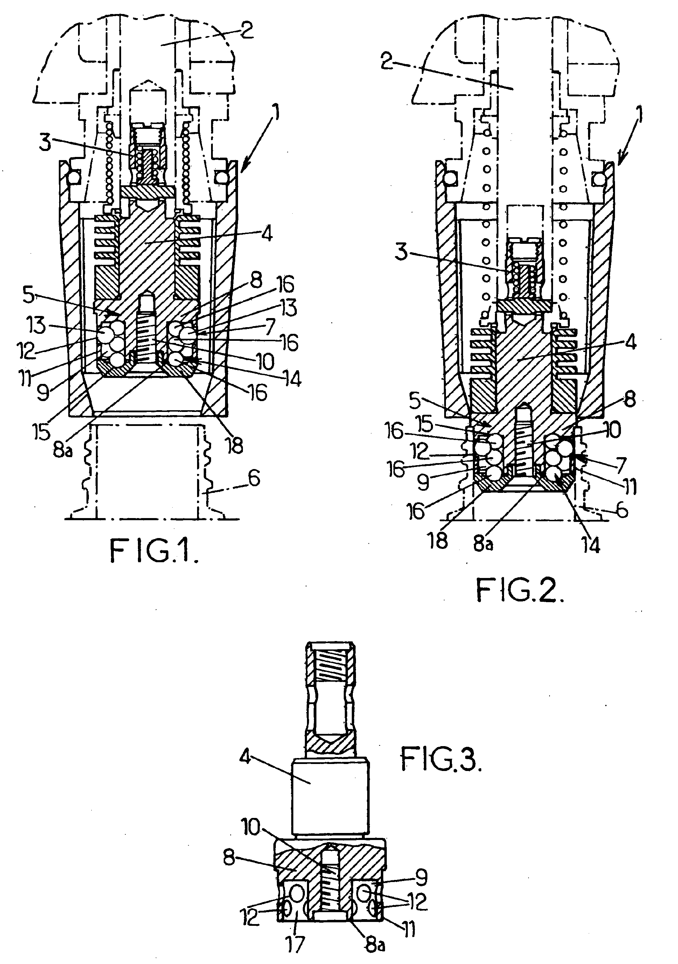

La figure 1 est une vue en coupe partielle d'un dispositif de support selon l'invention constitutif d'un dispositif de transport d'un récipient.

L'élément de transport, désigné dans son ensemble par le numéro de référence 1, comprend un mandrin 2 tournant (entraîné par des moyens non représentés sur les figures mais de type connus en soi) pourvu d'un alésage 3 central dans lequel est monté un organe 4 de support, avantageusement sous la forme d'une tige, appartenant à un dispositif de support 5 et de préhension d'un col 6 d'un corps ou d'un récipient creux, avantageusement d'une préforme.

L'organe 4 de support tel que la tige 4 est monté de manière amovible sur le mandrin 2. Un tel montage, de type baïonnette, est connu en soi et exploité par la Demanderesse. La partie supérieure de la tige forme un culot à baïonnette destiné à être reçu dans une douille correspondante formée à l'extrémité inférieure de l'alésage 3.

L'organe 4 de support est propre à être engagé à l'intérieur du col 6 du récipient, par exemple dans le col d'une préforme avant soufflage de la préforme chauffée ou alors dans le col du récipient formé après cette opération de soufflage.

L'organe 4 de support présente des éléments 7 d'appui effaçables élastiquement selon une direction radiale et propres à prendre appui contre la paroi intérieure du col 6.

Plus précisément, l'organe 4 de support comprend une embase 8 sensiblement cylindrique de révolution comportant un canal 9 périphérique défini entre un noyau 10 central et une paroi 11 externe formant jupe entourant le noyau 10 à distance radiale et percée d'au moins une rangée de lumières 12 à contour circulaire.

Il est prévu une pluralité de billes 13 constituant les éléments 7 d'appui de l'organe 4 de support, en nombre égal à celui des lumières 12, et disposées en au moins une rangée dans le canal 9 périphérique tout en étant situées en regard des lumières 12 respectives. Avantageusement, les billes 13 ont un diamètre sensiblement supérieur au diamètre des lumières 12 permettant ainsi leur maintien dans le canal 9 périphérique.

Des moyens 14 de rappel élastique sont interposés entre le noyau 10 central et les billes 13 de telle sorte que celles-ci soient repoussées élastiquement dans les lumières 12 respectives et saillent partiellement hors de celles-ci.

Afin de renforcer les forces de frictions entre l'organe 4 de support et la paroi intérieure du col 6, les lumières 12 et les billes 13 sont avantageusement réparties en au moins deux rangées parallèles.

Les moyens 14 de rappel élastique comprennent au moins un coussin 15 annulaire élastique disposé autour du noyau 10 sur lequel les billes 13 sont en appui radial élastique.

De manière plus précise, le coussin 15 annulaire élastique comprend avantageusement au moins deux anneaux 16 toriques élastiques juxtaposés et définissant à leur jonction extérieure un dièdre annulaire curviligne dans lequel prennent appui les billes 13 d'une même rangée.

Selon un mode de réalisation préférentiel de l'invention et tel qu'illustré dans les figures 1 à 3, le coussin 15 annulaire élastique comprend trois anneaux 16 toriques élastiques juxtaposés et définissant, à leurs jonctions extérieures, deux dièdres annulaires curvilignes parallèles dans lesquels prennent appui respectivement les billes 13 de deux rangées.

Il est bien entendu dans les compétences de l'homme de l'art d'adapter le nombre d'anneaux 16 toriques élastiques au nombre de rangées de billes 13 et de lumières 12.

Il est également tout à fait dans les compétences de l'homme de l'art d'adapter le nombre de rangées de billes à la zone surfacique intérieure du col du récipient et du poids de ce récipient.

Avantageusement, afin d'améliorer les forces de friction entre la surface intérieure du col 6 et les billes 13, les rangées de billes 13 sont décalées les unes par rapport aux autres, de manière telle qu'une bille 13 d'une rangée inférieure soit encadrée par deux billes 13 de la rangée immédiatement supérieure et/ou inférieure.

Le canal 9 périphérique, dans lequel sont disposés les moyens 14 de rappel élastique ainsi que les billes 13, est plus précisément défini par une gorge 17 annulaire et par une plaque 18 de fermeture assemblée sur la face frontale 8a de l'embase 8, la plaque 18 de fermeture n'étant pas représentée sur la figure 3 par mesure de clarté.

Il entendu par face frontale 8a la face de l'embase 8 faisant face au col 6 du récipient lors de l'insertion de l'organe 4 de support dans le col 6 du récipient.

La plaque 18 de fermeture est fixée sur l'embase 8 par tout moyen de fixation de type connu en soi, par exemple à l'aide d'une vis apte à se fileter dans le noyau 10 central de l'embase 8.

Les moyens de fixation sont avantageusement du type amovible permettant ainsi de remplacer facilement les moyens 14 de rappel élastique ainsi que les billes 13 une fois que ceux-ci ont atteint un certain degré d'usure au bout d'un certain laps de temps.

Le dispositif de support 5 selon l'invention s'applique plus particulièrement aux installations nécessitant le transport de récipients pourvus de cols et comportant une multiplicité de dispositifs de transport disposés les uns à la suite des autres articulés en une chaîne de transport et équipés chacun d'un dispositif de support individuel d'un récipient par son col 6.

De manière plus précise, les dispositifs de support 5 selon l'invention s'appliquent au transport de préformes dans une zone de chauffage avant leur placement dans un moule pour l'opération de soufflage permettant la formation d'un corps creux.

Ainsi, si le dispositif de transport équipe un four tunnel permettant le chauffage du récipient dans une installation de fabrication et de traitement de récipients en matière thermoplastique telle que du PET, chaque élément de transport du dispositif de transport est entraîné en rotation autour de son axe de manière à ce que le récipient soit chauffé sur son pourtour à l'aide des moyens de chauffage agencés dans le four de part et d'autre de la trajectoire des dispositifs de transport.

## Revendications

1. Dispositif de support (5) individuel d'un récipient pourvu d'un col (6) propre à supporter ledit récipient par son col (6), comprenant un organe (4) de support qui est propre à être engagé à l'intérieur du col (6) du récipient et qui comporte des éléments (7) d'appui effaçables élastiquement en direction radiale et propres à prendre appui avec friction contre la paroi intérieure dudit col (6),
**caractérisé en ce que** l'organe (4) de support comprend:
- une embase (8) sensiblement cylindrique de révolution comportant un canal (9) périphérique défini entre un noyau (10) central et une paroi (11) externe formant jupe entourant ledit noyau (10) à distance radiale et percée d'au moins une rangée de lumières (12) à contour circulaire,
- une pluralité de billes (13) constituant les susdits éléments (7) d'appui, en nombre égal à celui des lumières (12) et disposées en au moins une rangée dans ledit canal (9) en étant situées en regard des lumières (12) respectives, les billes (13) ayant un diamètre sensiblement supérieur au diamètre des lumières (12), et
- des moyens (14) de rappel élastique interposés entre ledit noyau (10) et les billes (13) de telle sorte que celles-ci soient repoussées élastiquement dans les lumières (12) respectives et saillent partiellement hors de celles-ci, les moyens (14) de rappel élastique comprenant au moins un coussin (15) annulaire élastique disposé autour du noyau (10) et sur lequel les billes (13) sont en appui radial élastique.

2. Dispositif de support selon la revendication 1, **caractérisé en ce que** les lumières (12) de la paroi (11) externe sont réparties en plusieurs rangées parallèles et **en ce que** les billes (13) sont disposées en plusieurs rangées respectives.

3. Dispositif de support selon la revendication 2, **caractérisé en ce que** les lumières (12) de la paroi (11) externe sont réparties en deux rangées parallèles et **en ce que** les billes (13) sont disposées en deux rangée respectives.

4. Dispositif de support selon l'une quelconque des revendications 1 à 3, **caractérisé en ce que** les lumières (12) de la paroi (11) externe sont réparties en plusieurs rangées parallèles et **en ce que** les rangées de billes (13) sont décalées les unes par rapport aux autres, de manière telle qu'une bille (13) d'une rangée soit encadrée par deux billes (13) de la rangée immédiatement supérieure et/ou inférieure.

5. Dispositif de support selon l'une quelconque des revendications 1 à 4, **caractérisé en ce que** le coussin (15) annulaire élastique comprend au moins deux anneaux (16) toriques élastiques juxtaposés et définissant à leur jonction extérieure un dièdre annulaire curviligne dans lequel prennent appui les billes (13) d'une rangée.

6. Dispositif de support selon les revendications 4 et 5, **caractérisé en ce que** le coussin (15) annulaire élastique comprend trois anneaux (16) toriques élastiques juxtaposés et définissant à leurs jonctions extérieures deux dièdres annulaires curvilignes parallèles dans lesquels prennent appui respectivement les billes (13) des deux rangées.

7. Dispositif de support selon l'une quelconque des revendications 1 à 6, **caractérisé en ce que** le canal (9) est défini par une gorge (17) annulaire creusée dans la face frontale (8a) de l'embase et par une plaque (18) de fermeture assemblée sur ladite face frontale (8a) de l'embase (8).

8. Installation de transport de récipients pourvus de cols, comportant une multiplicité de dispositifs de transport disposés les uns à la suite des autres de façon articulée en une chaîne de transport et équipés chacun d'un dispositif de support (5) individuel d'un récipient par son col, **caractérisé en ce que** les dispositifs de support (5) de récipients sont constitués selon l'une quelconque des revendications 1 à 7.

## Claims

1. Individual support device (5) for a container provided with a neck (6), capable of supporting said container by its neck (6), comprising a support member (4) which is capable of being engaged inside the neck (6) of the container and which comprises support elements (7) which are elastically retractable in the radial direction and capable of bearing with friction against the internal wall of said neck (6),
**characterized in that** the support member (4) comprises:
- a substantially axisymmetric cylindrical base (8) comprising a peripheral channel (9) defined between a central core (10) and an external wall (11) forming a skirt surrounding said core (10) at a radial distance and perforated by at least one row of apertures (12) of circular contour,
- a plurality of balls (13) forming the aforementioned support elements (7), of equal number to that of the apertures (12) and arranged in at least one row in said channel (9), facing the respective apertures (12), the balls (13) having a diameter substantially greater than the diameter of the apertures (12), and
- elastic return means (14) interposed between said core (10) and the balls (13) such that said balls are pushed back elastically into the respective apertures (12) and project partially outside thereof, the elastic return means (14) comprising at least one elastic annular cushion (15) arranged about the core (10) and against which the balls (13) bear radially elastically.

2. Support device according to Claim 1, **characterized in that** the apertures (12) of the external wall (11) are distributed in a plurality of parallel rows and **in that** the balls (13) are arranged in a plurality of respective rows.

3. Support device according to Claim 2, **characterized in that** the apertures (12) of the external wall (11) are distributed in two parallel rows and **in that** the balls (13) are arranged in two respective rows.

4. Support device according to any one of Claims 1 to 3, **characterized in that** the apertures (12) of the external wall (11) are distributed in a plurality of parallel rows and **in that** the rows of balls (13) are out of line with the others so that one ball (13) of a row is surrounded by two balls (13) of the row immediately above and/or below.

5. Support device according to any one of Claims 1 to 4, **characterized in that** the elastic annular cushion (15) comprises at least two juxtaposed elastic toric rings (16) and defining at their external junction a curved annular dihedron in which the balls (13) of a row bear.

6. Support device according to Claims 4 and 5, **characterized in that** the elastic annular cushion (15) comprises three juxtaposed elastic toric rings(16) and defining at their external junctions two parallel curved annular dihedrons in which respectively the balls (13) of the two rows bear.

7. Support device according to any one of Claims 1 to 6, **characterized in that** the channel (9) is defined by an annular groove (17) hollowed into the front face (8a) of the base and by a closure plate (18) assembled on said front face (8a) of the base (8).

8. Installation for transporting containers provided with necks, comprising a multiplicity of transport devices arranged one after the other in an articulated manner in a transport chain and each equipped with a device (5) for the individual support of a container by its neck, **characterized in that** the support devices (5) for containers are formed according to any one of Claims 1 to 7.

## Patentansprüche

1. Einzelne Stütz-Vorrichtung (5) für einen mit einem Hals (6) versehenen Behälter die geeignet ist, den Behälter an seinem Hals (6) zu stützen und ein Stütz-Element (4) umfasst, das ins Innere des Halses (6) des Behälters in Eingriff gebracht werden kann und das Halteelemente (7) aufweist, die in radialer Richtung elastisch zurückgeschoben werden können und mit Reibung an der Innenwand des Halses (6) anliegen können, **dadurch gekennzeichnet, dass** das Stütz-Element (4) Folgendes umfasst:
- ein im Wesentlichen rotationszylindrisches Unterteil (8), das einen zwischen einem mittigen Kern (10) und einer Außenwand (11) definierten umlaufenden Kanal (9) aufweist, die einen Mantel bildet, der den Kern (10) radial beabstandet umgibt und mit mindestens einer Reihe von Öffnungen (12) mit kreisförmigem Umriss versehen ist,
- eine Mehrzahl von die Halteelemente (7) bildenden Kugeln (13) welche die Anzahl wie die Öffnungen (12) aufweisen und in mindestens einer Reihe in dem Kanal (9) gegenüber den jeweiligen Öffnungen (12) angeordnet sind, wobei die Kugeln (13) einen Durchmesser besitzen, der deutlich größer als der Durchmesser der Öffnungen (12) ist, und
- elastische Rückstellmittel (14), die derart zwischen dem Kern (10) und den Kugeln (13) eingefügt sind, dass diese elastisch in die jeweiligen Öffnungen (12) zurückgeschoben werden und teilweise aus diesen herausragen, wobei die elastischen Rückstellmittel (14) mindestens eine ringförmige, elastische Unterlage (15) umfassen, die um den Kern (10) herum angeordnet ist und auf denen die Kugeln (13) radial elastisch aufliegen.

2. Stütz-Vorrichtung nach Anspruch 1, **dadurch gekennzeichnet, dass** die Öffnungen (12) der Außenwand (11) über mehrere parallele Reihen verteilt sind und dadurch, dass die Kugeln (13) in mehreren entsprechenden Reihen angeordnet sind.

3. Stütz-Vorrichtung nach Anspruch 2, **dadurch gekennzeichnet, dass** die Öffnungen (12) der Außenwand (11) über zwei parallele Reihen verteilt sind und dadurch, dass die Kugeln (13) in zwei entsprechenden Reihen angeordnet sind.

4. Stütz-Vorrichtung nach einem der Ansprüche 1 bis 3, **dadurch gekennzeichnet, dass** die Öffnungen (12) der Außenwand (11) über mehrere parallele Reihen verteilt sind und dadurch, dass die Reihen der Kugeln (13) derart zueinander versetzt sind, dass eine Kugel (13) aus einer Reihe von zwei Kugeln (13) der unmittelbar darüber und/oder darunter befindlichen Reihe umgeben wird.

5. Stütz-Vorrichtung nach einem der Ansprüche 1 bis 4, **dadurch gekennzeichnet, dass** die ringförmige elastische Unterlage (15) mindestens zwei nebeneinander liegende wulstförmige elastische Ringe (16) umfasst, die an ihrer äußeren Verbindungsstelle ein ringförmiges gekrümmtes Dieder definieren, an dem die Kugeln (13) einer Reihe anliegen.

6. Stütz-Vorrichtung nach Anspruch 4 und 5, **dadurch gekennzeichnet, dass** die ringförmige elastische Unterlage (15) drei nebeneinander liegende wulstförmige elastische Ringe (16) umfasst, die an ihren äußeren Verbindungsstellen zwei ringförmige gekrümmte parallele Dieder definieren, an denen jeweils die Kugeln (13) der beiden Reihen anliegen.

7. Stütz-Vorrichtung nach einem der Ansprüche 1 bis 6, **dadurch gekennzeichnet, dass** der Kanal (9) von einer ringförmigen vertieften Nut (17) in der Vorderfläche (8a) des Unterteils und von einer an der Vorderseite (8a) des Unterteils (8) angebrachten Verschlussplatte (18) definiert wird.

8. Transportanlage für mit einem Hals versehene Behälter, die eine Vielzahl von Transportvorrichtungen aufweist, die hintereinander verbunden als eine Transportkette angeordnet sind und jeweils mit einer einzelnen Stütz-Vorrichtung (5) für den Hals eines Behälters ausgestattet sind, **dadurch gekennzeichnet, dass** die Stütz-Vorrichtungen (5) für die Behälter nach einem der Ansprüche 1 bis 7 ausgebildet sind.
